# EUROPEAN PATENT SPECIFICATION

(11) **EP 0 653 495 B1**
(45) Date of publication and mention of the grant of the patent: **02.06.1999**
(21) Application number: 94307790.9
(22) Date of filing: 24.10.1994
(51) Int. Cl.: C21D 5/14

(54) **Process for graphitizing cast iron**
Verfahren zum Graphitisieren von Gusseisen
Procédé de graphitisation de la fonte de moulage

(30) Priority: 12.11.1993 JP 306003/93
(43) Date of publication of application: 17.05.1995
(73) Proprietor: TOYOTA JIDOSHA KABUSHIKI KAISHA, Aichi-ken (JP)
(72) Inventor: Morikawa, Takashi, c/o Toyota Jidosha K. K., Toyota-shi, Aichi (JP); Shibata, Masashi, c/o Toyota Jidosha K. K., Toyota-shi, Aichi (JP)
(74) Representative: Ben-Nathan, Laurence Albert

(56) References cited:
- DE-C- 864 404
- SU-A- 142 670
- DATABASE WPI Section Ch, Week 8601, Derwent Publications Ltd., London, GB; Class M24, AN 86-005221 & SU-A-1 161 571 (GORKI POLY) 15 June 1985
- DATABASE WPI Section Ch, Week 9350, Derwent Publications Ltd., London, GB; Class M24, AN 93-402700 & SU-A-1 779 266 (DNEPR METAL INST) 30 November 1992
- PATENT ABSTRACTS OF JAPAN vol. 14, no. 6 (M-916) 9 January 1989 & JP-A-01 254 359 (KAWASAKI STEEL) 11 October 1989
- METAL SCIENCE AND HEAT TREATMENT, vol.33, no.9/10, 1991, NEW YORK US pages 753 - 758 A. P. BACHURIN ET AL. 'Alloyed White Iron .......'
- GIESSEREI., vol.75, no.20, 26 September 1988, DüSSELDORF, DE pages 599 - 604 H. HOCKE 'Der heutige Stand .....'

## Description

### BACKGROUND OF THE INVENTION

### 1. Technical Field of the Invention

The present invention relates to graphitization of cast iron, and particularly to a process for graphitizing cast iron during graphitization of a white pig iron structure in a malleable cast iron casting, which process can shorten the annealing time, and improve the mechanical properties, of the casting.

### 2. Description of Prior Art

Since malleable cast iron has good castability and becomes as ductile and as tough as cast steel, it is very useful as a mechanical structure material. Malleable cast iron is classified into whiteheart malleable cast iron, blackheart malleable cast iron, cast iron having a specified matrix, and the like. Among these cast irons, the blackheart malleable cast iron has a white pig iron structure as a malleable cast iron in an as-cast state. Since the casting is hard and brittle, it is graphitized by annealing in the production process thereof.

Though the time and the temperature of annealing conditions are determined by taking many casting factors into consideration, the annealing usually includes two steps. The first annealing step is carried out at 900 to 980°C for 10 to 20 hours, and free cementite is completely decomposed thereby. The second annealing step includes, in combination, slow cooling in the temperature range of 700 to 760°C for the purpose of direct graphitization and treatment over a long period of time in the temperature range of 700 to 730°C for the purpose of graphitizing cementite in the pearlite in the casting. As described above, both annealing steps usually take from about 20 to 100 hours to perform. Particularly, heating to the annealing temperature takes about 10 to 20 hours ("refer to Cast Steel and Cast Iron", 1970, page 254 - 257, Published by Asakurashoten).

As described above, graphitizing a malleable cast iron casting takes a long time and, as a result, productivity is low. Since the surface layer of the casting is oxidized and decarburized by heating over a long period of time, atmospheric heating is required to inhibit the phenomena. As a result, there arises a problem in that the treatment cost increases.

Moreover, in the process of graphitization, it is important to prevent the formation of a defective product caused by the formation of a defective structure or of flake graphite due to incomplete annealing caused by an inappropriate annealing cycle, namely, a low annealing temperature or an insufficient treating time.

Furthermore, a graphitized structure obtained by conventional treatment tends to have graphite which has not been sufficiently spheroidization refined even though the annealing cycle is appropriate. The graphitization, therefore, cannot give a graphite structure having satisfactory properties. The malleable cast iron thus obtained is not better than ordinary gray cast iron particularly in respect to the balance between the strength and ductility and the fatigue strength. An improvement in the graphitization process is desired in view of these properties.

As described above, shortening the annealing cycle, for example, by shortening the time for raising the temperature in graphitizing malleable cast iron has heretofore been considered. However, when a conventional cast iron is simply annealed while the time for raising the temperature is shortened, there arise problems in that graphitization does not proceed and that coarse graphite formation is caused. As a result, a shortening of the annealing cycle has not been realized yet.

### SUMMARY OF THE INVENTION

The present invention is intended to make it possible to shorten the time for graphitizing a malleable cast iron casting, and provides a process for rapidly graphitizing cast iron by adjusting the heating temperature and heating rate of the annealing cycle optimum under the condition so that the formation of graphite primary crystals and eutectic graphite during solidification of the cast iron is inhibited as much as possible by ensuring a high rate of cooling so that the cast iron completely forms a white pig iron structure in the as-cast state.

Another object of the present invention is to provide a process for rapidly graphitizing cast iron by adjusting the shape and distribution of graphite subsequent to graphitization for in a short period of time, which process further improves the conventional balance between strength and ductility.

A further object of the present invention is to provide a process for rapid graphitization, which process comprises annealing a cast-iron casting with the heating temperature, holding time and time for heating the casting to the heating temperature being made appropriate to the graphitization depth of the surface layer for the purpose of adjusting the shape and distribution of the graphite on the surface layer of the cast iron, and which process may improve the fatigue resistance of a conventional malleable cast iron.

The gist of the present invention will be described as follows.
(1) A process for graphitizing cast iron, with a white pig iron structure, having a composition the chemical components of which satisfy the following weight percentage conditions: 3.0% ≤ C + 1/3Si ≤ 4.5%, 1.0% ≤ Si ≤ 4.5%, 2.0% ≤ C, comprising heating the cast iron, during graphitization thereof, to a heating temperature of 900 to 1050°C, the cast iron being heated to 900°C within 60 sec, and annealing the cast iron.
(2) The process for graphitizing cast iron according to (1), wherein after heating the cast iron to the heating temperature, the cast iron is held at the heating temperature for such a period of time that the cast iron is not entirely graphitized to the core thereof.
(3) The process for graphitizing cast iron according to (1), wherein the cast iron is heated by an induction heater.
(4) The process for graphitizing cast iron according to (1), wherein the average cross sectional area of precipitated graphite is as extremely fine as from 0.4 to 0.8 × 10⁻⁴ mm² per unit area.

### BRIEF DESCRIPTION OF THE DRAWINGS

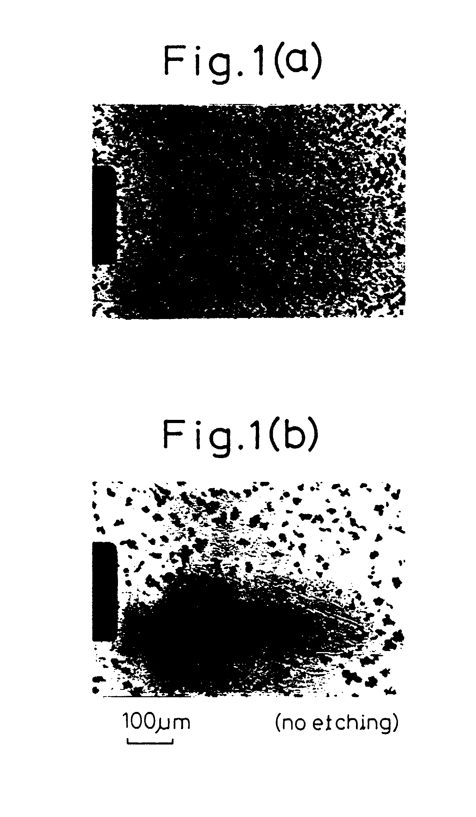

Figs. 1 (a) and Fig. 1 (b) show photographs of metal structures of test pieces according to an example and a comparative example of the present invention. Fig. 1 (a) shows the structure of Test piece No. 2 (example), and Fig. 1 (b) shows the structure of Test piece No. 15 (comparative example).

### MOST PREFERRED EMBODIMENT OF THE INVENTION

In the present invention, to shorten the period of time for graphitizing a malleable cast iron casting, a white pig iron structure in which graphite is not completely crystallized is used as a base structure, and the rate of heating the casting to the graphitizing temperature is controlled while a high concentration C region is being formed by retarded diffusion or reverse diffusion of C whereby rapid phase transformation is realized, the promotion of graphitization thus being achieved. As a result, in the treatment cycle of the present invention, it has become possible to increase graphite grain initiation sites by annealing and to suitably adjust the growth thereof. A good graphite structure can thus be obtained regardless of the rapid treatment.

The reason for restricting the requirements in the present invention will be explained below.

Firstly, the chemical components which are a first requirement of the present invention are illustrated below. C and Si are the most important elements for obtaining a white pig iron, and greatly influence the graphitization rate. The cast iron cannot be graphitized in a short period of time when the Si content is less than 1%. The cast iron becomes a mottled cast iron when the Si content exceeds 4.5%, and as a result does not become white pig iron in an as-cast state. Accordingly, the Si content is restricted to 1.0 to 4.5%.

Since white pig iron cannot be obtained from the cast iron when the C content is less than 2%, the C content is defined to be at least 2.0%.

On the other hand, when C + 1/3Si (C equivalent) of the cast iron is less than 3%, the cast iron may not become white pig iron, or graphitization in a short period of time becomes difficult even when it does become white pig iron. When the C equivalent exceeds 4.5%, it becomes mottled cast iron, or coarse primary crystal graphite crystallizes, and its mechanical properties are poor. Accordingly, the carbon equivalent is restricted in the range of 3.0 to 4.5%.

In addition, a prerequisite of the present invention is to obtain a white pig iron structure in an as-cast state. Since primary crystal graphite and eutectic graphite formed during solidification of the cast iron are coarse, it is prerequisite to prevent the crystallization of graphite. Though the prevention is also influenced by the casting conditions, the cooling rate of the cast iron is satisfactory when the entire iron casting is white pig iron in an as-cast state. The present invention, therefore, does not specifically restrict the cooling rate.

Secondly, the heating temperature and the period of time for heating the cast iron to the heating temperature, which are the second requirements for the present invention, are illustrated below. Graphitization of the cast iron takes a long time when the temperature is lower than 900°C. The strength of the cast iron is markedly lowered, and the strain caused by heat treatment is increased when the temperature exceeds 1,050°C. Accordingly, the temperature is restricted to 900 to 1,050°C. Moreover, the cast iron exhibits a markedly reduced graphitization rate, large precipitated graphite and deteriorated properties, when the time for heating the cast iron to 900°C exceeds 60 sec. Accordingly, the time for heating the cast iron to 900°C is defined to be less than 60 sec.

According to the process of the present invention, the cast iron is heated to 900°C within 60 sec and is then annealed to complete graphitization of the cast iron and form refined graphite, within about 2 minutes. Accordingly, the annealing cycle can be greatly shortened.

Furthermore, in the second aspect of the present invention, the holding time of the cast iron at the heating temperature is shortened, and the surface layer is mainly graphitized. Graphitization of the cast iron in the internal portion is thus relatively inhibited, and the surface layer alone is expanded. As a result, a compression residual stress is formed, and the fatigue strength of the cast iron can be enhanced.

The present invention will be explained, in more detail, in the following examples and comparative examples.

### EXAMPLES

### Example 1

A cast iron having chemical components as shown in Table 1 was induction melted, and cast into a mold to form a white pig iron structure. A test piece having a diameter of 3 mm and a length of 10 mm was cut out from the white pig iron casting, and a heating experiment was carried out using a Formaster (trade name) while the heating temperature and the heating rate (period of time for heating the test piece to the heating temperature) were varied.

**Table 1**

| Test piece No. | | C equiv. | C | Si | Heating temp. (°C) | Heating rate (sec) | Graphitization completion time (sec) | Average cross sectional area of graphite grains |
|---|---|---|---|---|---|---|---|---|
| | | | | | | | | (10⁻⁴ mm²) |
| Ex. | 1 | 3.6 | 3.1 | 1.5 | 900 | 10 | 105 | 0.50 |
| | 2 | 3.6 | 3.1 | 1.5 | 950 | 10 | 60 | 0.47 |
| | 3 | 3.6 | 3.1 | 1.5 | 1050 | 10 | 13 | 0.62 |
| | 4 | 3.6 | 3.1 | 1.5 | 950 | 60 | 112 | 0.82 |
| | 5 | 3.5 | 2.5 | 3.0 | 950 | 10 | 80 | 0.60 |
| | 6 | 3.2 | 2.1 | 3.3 | 950 | 10 | 95 | 0.45 |
| | 7 | 4.2 | 3.5 | 2.1 | 950 | 10 | 45 | 0.66 |
| | 8 | 4.3 | 3.2 | 3.2 | 950 | 10 | 37 | 0.72 |
| | 9 | 4.4 | 3.0 | 4.3 | 950 | 10 | 45 | 0.77 |
| CE. | 10 | 3.9 | 3.6 | 0.9 | 950 | 10 | * | - |
| | 11 | 3.8 | 2.3 | 4.6 | complete white pig iron not being formed in as-cast state (mottled cast iron) | | | |
| | 12 | 4.6 | 3.6 | 3.0 | complete white pig iron not being formed in as-cast state (mottled cast iron) | | | |
| | 13 | 2.9 | 2.4 | 1.5 | 950 | 10 | * | - |
| | 14 | 3.0 | 1.5 | 4.5 | white pig iron not being formed in as-cast state (pearlite matrix) | | | |
| | 15 | 3.6 | 3.1 | 1.5 | 950 | 100 | 920 | 1.6 |
| | 16 | 3.6 | 3.1 | 1.5 | 1070 | 10 | ** | - |
| | 17 | 3.6 | 3.1 | 1.5 | 850 | 10 | * | - |
| | 18 | 3.6 | 3.1 | 1.5 | 950 | 3600 | # | 1.7 |

| | | | | | | | | |
|---|---|---|---|---|---|---|---|---|
| Note: Ex. = example CE. = comparative example *not being graphitized | | | | | | | | |
| **test piece deformed | | | | | | | | |
| #held for 6000 sec | | | | | | | | |

The amount of thermal expansion of the test piece was measured during heating, and the time from reaching a desired temperature to the saturation of expansion caused by graphitization was defined as a graphitization finishing time. After the completion of heating, the test piece was allowed to cool. Observation of the structure of the test piece and image analysis thereof subsequent to the experiment was carried out, and the area ratio of graphite and the number of graphite grains were measured. The average cross sectional area of graphite grains ((graphite area)/(number of graphite grains) per unit area) was calculated from the results. The results are summarized in Table 1.

Any of Test Pieces Nos 1 to 9 (examples) exhibited the completion of graphitization within 2 minutes, and the average cross sectional area of the precipitated graphite was as extremely fine as from 0.4 to 0.8 × 10⁻⁴ mm².

In contrast to the results mentioned above, graphitization did not take place in Test piece No. 10 (comparative example) due to its low Si content even though the test piece was held at 950°C for 10 minutes. Since Test piece No. 11 (comparative example) had an excessively high Si content, it could not produce a complete white pig iron structure in an as-cast state. Since Test piece No. 12 (comparative example) had a high C equivalent, it could not produce a complete white pig iron structure. Since Test piece No. 13 (comparative example) had a low C equivalent, graphitization did not take place even though it was held at 950°C for at least 10 minutes. Since Test piece No. 14 (comparative example) had a low C content, it had a pearlitic structure in an as-cast state, and could not produce a white pig iron structure. Since Test piece No. 15 was heated at a low rate during graphitization, the precipitated graphite was coarse.

Since Test piece No. 16 (comparative example) was heated to an overly high temperature, it was deformed during heating. Since Test piece No. 17 (comparative example) was heated to a low temperature, almost no graphitization took place even when it was held at the heating temperature for at least 10 minutes. Test piece No. 18 (comparative example) was heated by an electric furnace in place of a Formaster (trade name), whereby blackheart malleable cast iron was produced. However, the graphite was coarse.

It has become evident from the results of the examples as described above that a cast iron in which extremely fine graphite is dispersed by graphitization for a short period of time can be produced within the scope of the present invention.

Fig. 1 shows photographs of metal structures of test pieces. Fig. 1 (a) shows the metal structure of Test piece No. 2 (example), and Fig. 1 (b) shows that of Test piece No. 15 (comparative example). These test pieces were all graphitized for 1 minute for comparing the graphitization rate. It is seen from Fig. 1 that Test piece No. 2 had very fine graphite particles and the white pig iron in the matrix was completely decomposed to form pearlite. In contrast to Test piece No. 2, since the graphitization heating rate of Test piece No. 15 (comparative example) was low, the graphite particles thus formed were coarse, and the white pig iron of the matrix was not found to be completely decomposed.

Test piece No. 2 (example, graphitization time: 1 minute) and Test piece No. 18 (comparative example, graphitization time: 100 minutes) were subjected to a tensile test. These test pieces were cooled slowly after completing graphitization to make their matrix a ferrite structure.

The tensile test results are shown in Table 2.

**Table 2**

| | Tensile strength (MPa) | Elongation (%) |
|---|---|---|
| No. 2 (Example) | 420 | 29 |
| No. 18 (comp. ex.) | 390 | 15 |

In Table 2, Test piece No. 2 (example) had an elongation close to twice as much as that of Test piece No. 18 (comparative example) while having about the same tensile strength, and, therefore, it was found to exhibit an excellent balance between the tensile strength and elongation.

### Example 2

A cast iron containing 3.0% of C and 1.8% of Si was induction melted, and cast into a mold to give a white pig iron. A fatigue test piece having a parallel portion with a diameter of 8 mm was cut out from the white pig iron casting, and subjected to an induction heating test. The test piece was heated to 1,000°C in 10 sec using an induction heater at a frequency of 150 kHz, held at 1,000°C for 15 to 60 sec, and allowed to cool after the completion of heating. The heated depth could be made large by extending the time for holding at 1,000°C, and as a result the range of fine graphite precipitation could be made deep. Moreover, it was found that the surface layer of the test piece could be completely graphitized by holding the test piece at 1,000°C for at least 15 sec.

Fatigue test pieces, which had precipitation depths of fine graphite in the surface layer ranging from 1 to 4 mm and which were prepared by changing the time for holding them at 1,000°C in the range from 15 to 60 sec were subjected to a rotary bending fatigue test. The results thus obtained are shown in Table 3. The hardness distribution of each of the test pieces was measured, and the graphite precipitation depth was defined as a depth from the surface of the test piece to the portion which had a hardness of (surface hardness + Hv 100).

**Table 3**

| Graphite precipitation depth t (mm) | t/D | Fatigue limit (MPa) |
|---|---|---|
| 1.0 | 0.125 | 130 |
| 1.6 | 0.20 | 240 |
| 2.9 | 0.36 | 250 |
| 4.0 | 0.50 | 200 |

It can be seen from the results in Table 3 that the test piece exhibits a good fatigue strength when the t/D ratio (t: thickness of a surface layer in which fine graphite is dispersed, D: diameter of the test piece) is in the range of 0.2 to 0.5, and an especially high fatigue strength when the ratio is in the range of 0.20 to 0.36. The test pieces exhibit a good or excellent fatigue strength possibly because graphitizing the surface layer alone makes the surface layer expand to generate a compression residual stress.

As shown above, the process for rapidly graphitizing malleable cast iron according to the present invention makes it possible to greatly shorten the annealing cycle by controlling the heating temperature and heating rate, and also makes it possible to improve the graphite structure subsequent to graphitization and produce a malleable cast iron casting particularly excellent in a balance between the strength and ductility. Furthermore, since the use of induction heating makes it possible to control the cooling rate of the casting after graphitization, the pearlite ratio of the matrix can be easily controlled. Accordingly, the strength of the casting can be controlled over a wide range.

## Claims

1. A process for graphitizing cast iron, with a white pig iron structure, having a composition the chemical components of which satisfy the following weight percentage conditions: 3.0% ≤ C + 1/3Si ≤ 4.5%, 1.0% ≤ Si ≤ 4.5%, 2.0% ≤ C, comprising heating said cast iron, during graphitization thereof, to a heating temperature of 900 to 1050°C, said cast iron being heated to 900°C within 60 sec, and annealing said cast iron.

2. The process for graphitizing cast iron according to claim 1, wherein after heating said cast iron to the heating temperature, said cast iron is held at the heating temperature for such a period of time that said cast iron is not entirely graphitized to the core thereof.

3. The process for graphitizing cast iron according to claim 1, wherein said cast iron is heated by an induction heater.

4. The process for graphitizing cast iron according to claim 1, wherein the average cross sectional area of precipitated graphite is as extremely fine as from 0.4 to 0.8 × 10⁻⁴ mm² per unit area.

## Patentansprüche

1. Verfahren zum Graphitisieren von Gußeisen mit einer Weißgußstruktur mit einer Zusammensetzung der chemischen Komponenten, die die folgenden Gewichtsprozentbedingungen erfüllt: 3,0% ≤ C + 1/3Si ≤ 4,5%, 1,0% ≤ Si ≤ 4,5%, 2,0% ≤ C, umfassend ein Erwärmen des Gußeisens während dessen Graphitisierung auf eine Erwärmungstemperatur von 900 bis 1050°C, wobei das Gußeisen innerhalb von 60 s auf 900°C erhitzt wird, und Tempern des Gußeisens.

2. Verfahren zum Graphitisieren von Gußeisen nach Anspruch 1, wobei nach dem Erwärmen des Gußeisens auf die Erwärmungstemperatur das Gußeisen während einer solchen Zeitdauer auf der Erwärmungstemperatur gehalten wird, daß das Gußeisen nicht vollständig bis zu dessen Kern graphitisiert.

3. Verfahren zum Graphitisieren von Gußeisen nach Anspruch 1, wobei das Gußeisen mittels einer Induktionsheizung erwärmt wird.

4. Verfahren zum Graphitisieren von Gußeisen nach Anspruch 1, wobei die mittlere Querschnittsfläche des abgeschiedenen Graphits derart extrem fein wie von 0,4 bis 0,8 x 10⁻⁴ mm² pro Einheitsfläche ist.

## Revendications

1. Procédé pour graphiter de la fonte, de structure de fonte blanche en gueuse, ayant une composition dont les composants chimiques remplissent les conditions suivantes relatives au pourcentage en poids : 3,0% ≤ C + 1/3 Si ≤ 4,5%, 1,0% ≤ Si ≤ 4,5%, 2,0% ≤ C, comprenant le chauffage de ladite fonte, au cours de la graphitisation de celle-ci, à une température de chauffage de 900 à 1050°C, ladite fonte étant chauffée à 900°C en 60 secondes, et le recuit de ladite fonte.

2. Procédé pour graphiter de la fonte suivant la revendication 1, dans lequel, après le chauffage de ladite fonte à la température de chauffage, ladite fonte est maintenue à la température de chauffage pendant une période de temps telle que ladite fonte n'est pas totalement graphitée jusqu'en son noyau.

3. Procédé pour graphiter de la fonte suivant la revendication 1, dans lequel ladite fonte est chauffée par un inducteur de chauffage.

4. Procédé pour graphiter de la fonte suivant la revendication 1, dans lequel la superficie de section moyenne de graphite précipité est aussi extrêmement fine que 0,4 à 0,8 x 10⁻⁴ mm² par unité de superficie.
